# EUROPÄISCHE PATENTSCHRIFT

(11) **EP 2 474 062 B1**
(45) Veröffentlichungstag und Bekanntmachung des Hinweises auf die Patenterteilung: **18.01.2017**
(21) Anmeldenummer: 10749838.8
(22) Anmeldetag: 30.08.2010
(51) Int. Cl.: H01M 8/04746, H01M 8/0432, H01M 8/04119, B64D 41/00

(54) **KONZEPT ZUR ABGASTROCKNUNG EINES BRENNSTOFFZELLENSYSTEMS UNTER NUTZUNG DES EINGESETZTEN FLÜSSIGWASSERSTOFFS ALS WÄRMESENKE**
CONCEPT FOR DRYING EXHAUST GAS OF A FUEL CELL SYSTEM UTILIZING THE LIQUID HYDROGEN AS A HEAT SINK
CONCEPT DE SÉCHAGE DES GAZ REJETÉS PAR UN SYSTÈME DE PILE À COMBUSTIBLE, AVEC UTILISATION DE L'HYDROGÈNE LIQUIDE COMME PUITS DE CHALEUR

(30) Priorität: 03.09.2009 DE 102009040013; 03.09.2009 US 239481 P
(43) Veröffentlichungstag der Anmeldung: 11.07.2012
(73) Patentinhaber: Airbus Operations GmbH, 21129 Hamburg (DE)
(72) Erfinder: HOFFJANN, Claus, 21147 Hamburg (DE); LAUCKNER, Johannes, 21073 Hamburg (DE)
(74) Vertreter: Kopf Westenberger Wachenhausen Patentanwälte PartG mbB
(86) Internationale Anmeldenummer: PCT/EP2010/062604
(87) Internationale Veröffentlichungsnummer: WO 2011/036027

(56) Entgegenhaltungen:
- EP-A2- 1 619 738
- EP-A2- 1 902 954
- DE-A1-102007 046 381
- US-A1- 2002 112 479
- US-A1- 2004 028 966
- US-A1- 2007 172 707
- US-A1- 2007 172 707
- US-B2- 7 185 447

## Beschreibung

Die vorliegende Anmeldung beansprucht die Priorität der US-Provisional Patentanmeldung Nr. 61/239,481, eingereicht am 3. September 2009 und der deutschen Patentanmeldung Nr. 10 2009 040 013.3, eingereicht am 3. September 2009.

### TECHNISCHES GEBIET

Die Erfindung betrifft ein System zum Trocknen von Abgasen eines Brennstoffzellensystems, ein Verfahren zum Trocknen von Abgasen eines Brennstoffzellensystems, eine Verwendung sowie ein Flugzeug mit mindestens einem Brennstoffzellensystem und einem System zur Trocknung von Abgasen des Brennstoffzellensystems.

### HINTERGRUND DER ERFINDUNG

Für moderne Verkehrsflugzeuge werden vereinzelt Brennstoffzellensysteme zur Bewältigung vielfältiger Aufgaben konzipiert oder bereits eingesetzt. Neben der Erzeugung von Elektrizität können auch andere Aufgaben erfüllt werden, wie etwa die Inertisierung eines Kraftstofftanks mittels des Abgases aus einem Brennstoffzellensystem. Generell besteht bei einer Verwendung von feuchter Luft zur Inertisierung eines Kraftstofftanks die Problematik, dass Treibstoffe, insbesondere Kerosin, hygroskopisch sind und dass außerdem in dem Tank eine Bakterienpopulation entstehen kann, die Sensoren zum Erfassen des Füllzustandes des Tanks beeinflusst und ungenau arbeiten lässt und zudem Eiskristalle entstehen können, die zu Beschädigungen an Triebwerks-Einspritzdüsen und Kraftstofffiltern führen können, wenn sich das Flugzeug im Reiseflug oder bei Temperaturen unterhalb des Gefrierpunkts am Boden befindet.

DE 10 2005 054 885 A1 und US 2007/0111060 A1 zeigen ein Sicherheitssystem zur Verminderung der Explosionsgefahr eines Treibstofftanks, bei der eine Schutzgaserzeugungseinrichtung ein Brennstoffzellensystem mit einer Brennstoffzelle umfasst und ein im Betrieb des Brennstoffzellensystems von der Brennstoffzelle erzeugtes Schutzgas bereitstellt.

DE 10 2007 046 381 A1 offenbart ein Brennstoffzellensystem mit Saugbetrieb für ein Luftfahrzeug, bei dem Feuchtigkeit aus der Abluft über einen Kondensatableiter abgeführt wird.

US 2002/112479 A1 offenbart ein Antriebsaggregat, das eine Anordnung von zwei Wärmetauschern aufweist, die über Ventile mit Wasserstoff beaufschlagt werden können, so dass Wasser auskondensieren und über Kondensatableiter entfernt werden kann.

US 2007/172707 A1 offenbart ein kombiniertes Brennstoffzellensystem mit einer Kombination aus einer ersten Brennstoffzelle eines ersten Typs und einer der ersten Brennstoffzelle nachgeschalteten zweiten Brennstoffzelle eines zweiten Typs. Die Anodenseite der ersten Brennstoffzelle ist mit einer Kathodenseite der zweiten Brennstoffzelle verbunden. Ein aus der ersten Brennstoffzelle austretendes Purgegas wird nicht an die Außenluft abgeführt, sondern der Kathodenseite der zweiten Brennstoffzelle zugeführt.

US 7 185 447 B2 zeigt eine Trocknungsvorrichtung für Gase mit einer Anordnung von zwei alternierend mit dem zu trocknenden Gas beaufschlagten Wärmetauschern, in denen eine Vereisung des in dem Gas befindlichen Wasserdampfs durchgeführt wird und anschließend durch Zufuhr von Umgebungsluft das darin akkumulierte Eis wieder getaut und als Kondensat wird.

Im Stand der Technik sind verschiedene Verfahren und Systeme bekannt, die zum Trocknen von Luft Verwendung finden. So wäre es beispielsweise möglich, eine Adsorption durch hygroskopische Medien durchzuführen, beispielsweise Silica-Gel. Allerdings ist die Wasseraufnahmekapazität eines hygroskopischen Mediums endlich, so dass es entweder ersetzt oder regeneriert werden muss. Das Ersetzen führt insbesondere in einem Flugzeug zu ausgeprägten Gewichtsproblemen und das stete Entleeren und Nachfüllen zu einem erhöhten Wartungsaufwand. Weiterhin wäre eine Regeneration durch einen entsprechenden Wärmeeintrag möglich, beispielsweise durch erwärmte Luft. Dies würde allerdings die Effektivität des Brennstoffzellensystems in Frage stellen, da zur thermischen Regeneration ein beträchtlicher Energieaufwand notwendig ist. Falls keine Regeneration durchgeführt werden soll, ist eine Abgastrocknung nur für eine begrenzte Dauer möglich. Generell werden bei derartigen Verfahren Taupunkte, d. h. Temperaturen, bei denen ein Gleichgewichtszustand von kondensierendem und verdunstendem Wasser besteht, erreicht, die bis weit in den zweistelligen negativen Bereich reichen.

Ein weiteres Verfahren zum Trocknen von Luft erfolgt durch Wassertransfer mittels einer selektiven Membran unter Ausnutzung einer Partialdruckdifferenz. Hierzu wird eine Membran eingesetzt, die ein zu trocknendes Gas von einem recht trockenen Gas trennt, wobei aufgrund einer Partialdruckdifferenz der Durchtritt von Wasser durch die Membran verursacht wird. Alternativ zu dem sehr trockenen Gas kann auch der statische Druck auf der Membranseite erhöht werden kann, auf der sich das zu trocknende Gas befindet. Dieses Verfahren wird durch die erzielbare Partialdruckdifferenz in seiner Trocknungsleistung begrenzt. Besonders niedrige Taupunkte eines Membran-Drucklufttrockners werden nur unter Einsatz eines recht hohen Betriebsdrucks und einer damit notwendigen hohen Kompressorleistung erreicht.

Ein weiteres, drittes Verfahren aus dem Stand der Technik zum Trocknen von Gasen erfolgt durch Abkühlung des Gases unter den Taupunkt, wofür im Grunde lediglich ein Wärmetauscher und eine Wärmesenke bzw. ein Kühlmedium benötigt werden. Im Anschluss an die Abkühlung und für die abschließende Trennung von flüssigem Wasser und gasförmigem Restgas wird meist ein Tropfenfänger verwendet. Dieses Prinzip erfordert allerdings eine recht hohe Kühlleistung, da flüssiges Produktwasser vorliegt und die bei dem Phasenübergang freiwerdende Energie abgeführt werden muss. Die zur Abkühlung des Gases eingesetzte Kälte kann zum Teil in einem anschließenden rekuperativen Wärmetauscher zurückerhalten werden. Grundsätzlich ist der erreichbare Taupunkt hierbei begrenzt durch den Gefrierpunkt, da innerhalb des Wärmetauschers auftretende Vereisung bei der heute üblichen Bauweise zum Blockieren von Gaskanälen führen kann.

### ZUSAMMENFASSUNG DER ERFINDUNG

Dementsprechend kann als Aufgabe der Erfindung angesehen werden, ein System zum Kühlen des Abgases eines Brennstoffzellensystems vorzuschlagen, das die vorangehend geschilderten Nachteile verringert oder gänzlich eliminiert. Insbesondere kann als Aufgabe der Erfindung angesehen werden, ein System zum Trocknen von Abgas eines Brennstoffzellensystems vorzuschlagen, das mit einer möglichst geringen Energie eine möglichst effektive Trocknung des Abgases ermöglicht, ohne die Komplexität des Brennstoffzellensystems oder dessen Peripherie deutlich zu steigern, bei gleichzeitiger Minimierung des zusätzlichen Gewichts.

Die Aufgabe wird gelöst durch ein System zum Trocknen von Abgas eines Brennstoffzellensystems gemäß dem unabhängigen Anspruch 1. Vorteilhafte Weiterbildungen sind den Unteransprüchen zu entnehmen.

Gemäß einem Aspekt der Erfindung weist das erfindungsgemäße System zum Trocknen von Abgasen eines Brennstoffzellensystems mindestens einen ersten Wärmetauscher, mindestens einen zweiten Wärmetauscher, einen gemeinsamen Abgaseingang und einen gemeinsamen Abgasausgang, einen gemeinsamen Kühlmitteleingang und einen gemeinsamen Kühlmittelausgang, einen gemeinsamen Luftauslass, eine Ventilanordnung mit mehreren Ventilen und mindestens einen Kondensatableiter zum Abführen von Kondensat. Die Ventilanordnung ist dazu eingerichtet, entweder den ersten Wärmetauscher oder den zweiten Wärmetauscher in einer Vereisungsphase zu betreiben und den jeweils anderen Wärmetauscher in einer Regenerationsphase zu betreiben. In der Vereisungsphase strömt ein Teil eines in den Abgaseingang und durch den gemeinsamen Abgasausgang ausströmenden Abgases und ein in den gemeinsamen Kühlmitteleingang und aus dem gemeinsamen Kühlmittelausgang strömendes Kühlmittel durch den jeweiligen Wärmetauscher zum Vereisen des im Abgas befindlichen Wasserdampfs. In der Regenerationsphase des betreffenden Wärmetauschers strömt ein Teil des Abgases aus dem gemeinsamen Abgaseingang durch den betreffenden

Wärmetauscher zu dem gemeinsamen Luftauslass und taut dabei das gebildete Eiskondensat auf und führt es durch den Kondensatableiter ab.

Der Betrieb eines Brennstoffzellensystems erfolgt in der Regel durch Zuführen eines Brennstoffs und einer ausreichenden Menge an sauerstoffhaltiger Luft. Es ist denkbar, dass der Brennstoff für eine Brennstoffzelle insbesondere während des Reiseflugs, möglicherweise aber auch am Boden, eine recht niedrige Temperatur aufweist, die dazu ausreichen könnte, den in einem Abgas befindlichen Wasserdampf in einem Wärmetauscher zu vereisen. Ohne Anspruch auf Vollständigkeit zu erheben, könnte dieser Brennstoff etwa ein herkömmlicher Kraftstoff sein, der zum Betrieb der Triebwerke des Flugzeugs verwendet wird und der vor Erreichen eines Reformators entsprechend durch den ersten oder zweiten Wärmetauscher strömen könnte. Andererseits ist es auch möglich, reinen Wasserstoff einzusetzen, der an Bord eines Flugzeugs im kryogenen Zustand gelagert werden muss und dementsprechend eine sehr niedrige Temperatur aufweist.

Bei der Verwendung herkömmlicher Wärmetauscher zum Herunterkühlen von Abgasen kann besonders bei niedrigem Temperaturniveau des Kühlmittels eine Vereisung innerhalb des Wärmetauschers auftreten, die tendenziell Leitungen innerhalb des Wärmetauschers blockiert. Dadurch würde der Wärmetauscher ab einem bestimmten Vereisungsgrad nicht mehr ordnungsgemäß funktionieren. Die Vereisung des Wasserdampfs kann aber durch Integration von zwei getrennten Wärmetauschern dennoch in vorteilhafter Weise genutzt werden, wenn diese beiden Wärmetauscher alternierend, d.h. im Wechsel, betrieben werden. Hierzu wird vorausgesetzt, dass der Massenstrom des Brennstoffzellenabgases geteilt wird. Wird ein erster Wärmetauscher beispielsweise mit dem Kühlmittel beaufschlagt, so dass hindurchströmendes Abgas durch Vereisung des Wasserdampfs getrocknet wird, füllt sich der erste Wärmetauscher langsam mit Eis. Um zu verhindern, dass der Betrieb des Wärmetauschers aufgrund der Vereisung nicht mehr möglich ist, kann die Zufuhr des Kühlmittels unterbrochen und die Zufuhr des Abgases an diesem ersten Wärmetauscher reduziert werden, um anschließend den zweiten Wärmetauscher mit dem Kühlmittel und einer größeren Menge des Abgases zu beaufschlagen. Der erste Wärmetauscher befindet sich nach einer derartigen Umschaltung nicht mehr in einer Vereisungsphase, sondern in einer Regenerationsphase. In der Regenerationsphase kann sich der Wärmetauscher allmählich durch den warmen Massenstrom eines Teilstroms des Brennstoffzellenabgases erwärmen, so dass das akkumulierte Eis langsam auftaut und durch einen Kondensatableiter aus dem Wärmetauscher abgeführt werden kann. Während dieser Regenerationsphase wird der Wasserdampf aus dem Abgas ausschließlich in dem zweiten Wärmetauscher als Eis akkumuliert, der wiederum bei einem bestimmten Füllgrad zurück in eine Regenerationsphase wechseln sollte.

Basierend auf dieser erzwungenen Vereisung von Wasserdampf aus dem Abgas und der abwechselnden Vereisungs- und Regenerationsphase können die Nachteile des herkömmlichen Wärmetauschers eliminiert werden, wobei gleichzeitig ein sehr niedriger Taupunkt aufgrund der starken Kühlung des Abgases erreicht werden kann.

In einer vorteilhaften Ausführungsform des erfindungsgemäßen Systems steht der gemeinsame Kühlmitteleingang mit einem Tank für flüssigen Wasserstoff in Verbindung. Dadurch wird eine besonders niedrige Temperatur innerhalb des betreffenden Wärmetauschers erreicht, so dass insbesondere der Taupunkt des Abgases in einem deutlich zweistelligen Bereich unter Null Grad Celsius liegt.

Es ist weiterhin bevorzugt, dass der gemeinsame Abgasausgang mit einem Kraftstofftank zum Einleiten von sauerstoffabgereicherter trockener Luft zum Inertisieren in Verbindung steht. Dadurch wird ein innerhalb der Brennstoffzelle entstehendes Abfallprodukt in Form von sauerstoffabgereicherter trockener Luft weiter verwendet und kann gleichzeitig der Neigung zum Entstehen von Bakterien in dem Tank oder von Vereisung oder von Messfehlern an Tankfüllstandssensoren entgegenwirken.

In einer weiter vorteilhaften Ausführungsform des erfindungsgemäßen Systems ist der gemeinsame Kühlmittelausgang mit einem Tank für flüssigen Wasserstoff verbunden. Dies bringt einen Wärmeeintrag in zumindest einen Bereich des Tanks für flüssigen Wasserstoff, der zum Entnehmen gasförmigen Wasserstoffs aus einem kryogenen Tank mit Wasserstoff notwendig ist.

Weiter ist es besonders vorteilhaft, dass das erfindungsgemäße System eine mit der Ventilanordnung verbundene Recheneinheit aufweist, die dazu eingerichtet ist, die Ventilanordnung derart zu regeln, dass der erste Wärmetauscher und der zweite Wärmetauscher abwechselnd in einer Vereisungsphase und einer Regenerationsphase betrieben werden. Dadurch kann sichergestellt werden, dass in keinem der beiden Wärmetauscher eine übermäßige Vereisung auftritt, da kein manueller Aufwand mehr notwendig ist.

Besonders bevorzugt ist dabei, dass die Recheneinheit anhand von bekannten Vereisungskennlinien des ersten Wärmetauschers und des zweiten Wärmetauschers in Abhängigkeit von Umgebungsbedingungen einen günstigen Zeitpunkt für die Umschaltung der Ventilanordnung selbstständig ermittelt und die Umschaltung der Ventilanordnung auch umsetzt. Die Umgebungsbedingungen könnten beispielsweise die Umgebungstemperatur der Wärmetauscher betreffen, die Temperatur des Kühlmittels, die Temperatur des eingeleiteten Abgases und der Luftdruck sein. Dadurch kann anhand von vorbekannten Charakteristika der Wärmetauscher festgestellt werden, wann mit einem Maximum an Eissättigung gerechnet werden kann, bevor der Wärmetauscher vollkommen durch Eis verstopft wird. Dies erhöht die Sicherheit und Zuverlässigkeit des erfindungsgemäßen Systems.

Zudem könnten der erste und der zweite Wärmetauscher Sensoren zum Feststellen ihres jeweiligen Vereisungsgrades aufweisen und/oder zum Erfassen ihrer Temperatur entsprechende Temperatursensoren besitzen. Diese Sensoren könnten mit der Recheneinheit zum Ermitteln des günstigen Zeitpunkts für die Umschaltung verbunden sein, so dass eine erneute Steigerung der Zuverlässigkeit und Sicherheit des erfindungsgemäßen Systems erreicht wird.

Besonders vorteilhaft weist das erfindungsgemäße System einen dritten Wärmetauscher mit einem dritten Kühlmitteleintritt, einem dritten Kühlmittelaustritt, einem dritten Abgaseintritt und einem dritten Abgasaustritt auf, wobei der dritte Kühlmitteleintritt mit dem gemeinsamen Kühlmittelausgang des ersten Wärmetauschers und des zweiten Wärmetauschers verbunden ist und wobei der dritte Abgasaustritt mit dem gemeinsamen Abgaseingang des ersten Wärmetauschers und des zweiten Wärmetauschers verbunden ist. Hierdurch kann bereits eine Art "Vorkondensation" erreicht werden, die einen großen Anteil des vorhandenen Wasserdampfs aus dem Abgas entfernt und die Effizienz der nachgeschalteten ersten und zweiten Wärmetauscher steigert.

Es ist besonders vorteilhaft, wenn der dritte Kühlmittelaustritt des dritten Wärmetauschers dazu eingerichtet ist, mit einem Brennstoffeingang eines Brennstoffzellensystems verbunden zu werden. Durch das Durchströmen von zwei Wärmetauschern, die mit einem Abgas aus einem Brennstoffzellensystem beaufschlagt werden, wird das Kühlmittel gleichzeitig erwärmt und kann dadurch besonders für die Verwendung in einem Brennstoffzellensystem vorbereitet werden. Ist vorgesehen, das Brennstoffzellensystem mit Wasserstoff zu betreiben, so ist etwa darauf zu achten, dass das einströmende Wasserstoffgas eine Temperatur aufweist, die möglichst über dem Gefrierpunkt von Wasser liegt, um eventuelle Vereisungseffekte zu vermeiden.

Schließlich könnte ein erfindungsgemäßes System auch einen vierten Wärmetauscher mit einem vierten Kühlmitteleintritt, einem vierten Kühlmittelaustritt, einem vierten Abgaseintritt und einem vierten Abgasaustritt aufweisen, wobei der vierte Kühlmitteleintritt mit dem gemeinsamen Abgasausgang des ersten Wärmetauschers und des zweiten Wärmetauschers verbunden ist und wobei der vierte Abgasaustritt mit dem dritten Abgaseintritt des dritten Wärmetauschers verbunden ist. Da in den vorher befindlichen zwei oder drei Wärmetauschern das Abgas bereits deutlich heruntergekühlt worden ist, kann aus dem gemeinsamen Abgasausgang des ersten Wärmetauschers und des zweiten Wärmetauschers ein relativ kühles Abgas entnommen werden, welches seine Kälte über den hier beschriebenen vierten Wärmetauscher wieder an das erfindungsgemäße System abgeben kann, um so die Effizienz des erfindungsgemäßen Systems zu steigern.

Der Zusatz "dritte" und "vierte" bezüglich der Kühlmittelein- und austritte und der Abgasein- und austritte soll lediglich die Zugehörigkeit zu dem jeweiligen Wärmetauscher symbolisieren.

Weiter wird die Aufgabe durch ein Verfahren zum Trocknen von Abgasen eines Brennstoffzellensystems gelöst, welches im Wesentlichen die Schritte des Einleitens eines Teils des Abgases eines Brennstoffzellensystems in einen ersten Wärmetauscher und Beaufschlagen des ersten Wärmetauschers mit einem Kühlmittel zum Vereisen von in dem Abgas befindlichen Wasserdampf, das Unterbrechen dieser Einleitung und Reduzieren der Einleitung von Abgas zum Regenerieren des ersten Wärmetauschers, das Einleiten von Kühlmittel und Beaufschlagen mit einem Teil des Abgases des zweiten Wärmetauschers und das Unterbrechen des Einleitens von Kühlmittel und das Reduzieren der Abgasbeaufschlagung des zweiten Wärmetauschers für dessen Regenerierung aufweist.

Schließlich ist es besonders vorteilhaft, wenn das erfindungsgemäße Verfahren die Schritte kontinuierlich nacheinander ausführt.

Schließlich lösen auch eine Verwendung des erfindungsgemäßen Systems in einem Flugzeug sowie ein Flugzeug mit mindestens einem Brennstoffzellensystem und einer Vorrichtung zum Kühlen von Abgasen des Brennstoffzellensystems die Aufgabe.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt ein erfindungsgemäßes System mit einem ersten Wärmetauscher und einem zweiten Wärmetauscher.
Fig. 2 zeigt ein erfindungsgemäßes System mit einem zusätzlichen dritten Wärmetauscher und einem zusätzlichen vierten Wärmetauscher.
Fig. 3 zeigt eine schematische Ansicht des erfindungsgemäßen Verfahrens.
Fig. 4 zeigt ein Flugzeug mit mindestens einem Brennstoffzellensystem und einer Vorrichtung zum Trocknen von Abgasen des Brennstoffzellensystems.

### DETAILLIERTE DARSTELLUNG EXEMPLARISCHER

### AUSFÜHRUNGSFORMEN

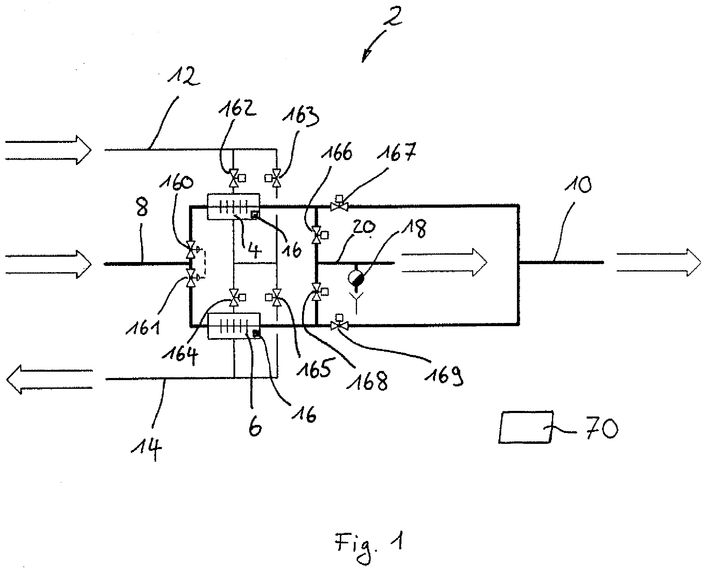

Fig. 1 zeigt ein erfindungsgemäßes System 2 zum Trocknen von Abgasen eines Brennstoffzellensystems, das mindestens einen ersten Wärmetauscher 4, mindestens einen zweiten Wärmetauscher 6, einen gemeinsamen Abgaseingang 8, einen gemeinsamen Abgasausgang 10, einen gemeinsamen Kühlmitteleingang 12 und einen gemeinsamen Kühlmittelausgang 14 aufweist. Ferner sind in beispielhaft in dem erfindungsgemäßen System mehrere Ventile 160-169 angeordnet, die zusammen die im Folgenden auch als "Ventilanordnung" bezeichnete Anordnung bilden. Weiterhin ist in dem erfindungsgemäßen System ein Kondensatableiter 18 angeordnet, der sich an einem Luftauslass20 befindet.

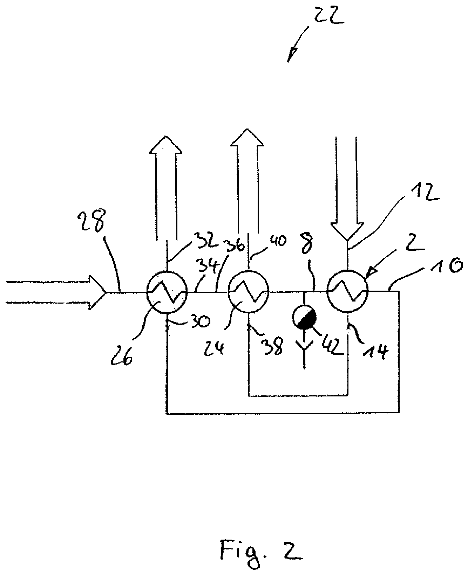

Der erste Wärmetauscher 4 und der zweite Wärmetauscher weisen jeweils einen Kühlmitteleintritt, einen Kühlmittelaustritt, einen Abgaseintritt und einen Abgasaustritt auf. Der Übersichtlichkeit halber werden hierfür keine expliziten Bezugszeichen vergeben. Aus der weiter nachfolgend beschriebenen Fig. 2 ergibt sich die explizit dargestellte Analogie in Bezug auf weitere Wärmetauscher, deren jeweilige Eintritte bzw. Austritte mit dem jeweiligen Zusatz "dritte" bzw. "vierte" kenntlich gemacht werden. Die jeweiligen Eintritte bzw. Austritte des ersten und des zweiten Wärmetauschers 4 und 6 wären demnach mit den Zusätzen "erste" bzw. "zweite" zu bezeichnen.

Der Abgaseingang 8 ist mit einem Abgasanschluss eines Brennstoffzellensystems verbunden, welches hier nicht dargestellt ist. In dem gezeigten Fall sind beispielhaft der Kühlmitteleingang 12 und der Kühlmittelausgang 14 mit einem Tank für flüssigen Wasserstoff verbunden.

Durch Beaufschlagen des Abgaseingangs 8 mit einem Wasserdampf aufweisenden Abgas eines Brennstoffzellensystems ist vorgesehen, dass durch die exemplarisch als Proportionalventile ausgeführten Ventile 160 und 161 den Abgasstrom in zwei Teilströme aufteilen, die zu dem ersten Wärmetauscher 4 und zu dem zweiten Wärmetauscher 6 fließen. Zur Kühlung des ersten Wärmetauschers 4 oder des zweiten Wärmetauschers 6 wird durch entsprechendes Öffnen bzw. Schließen der Ventile 162 bis 165 der betreffende Wärmetauscher 4 bzw. 6 mit Wasserstoff aus dem gemeinsamen Kühlmitteleingang 12 beaufschlagt, der beim Durchleiten durch den betreffenden Wärmetauscher 4 oder 6 eine Temperatur nahe des Siedepunkts von Wasserstoff aufweist und zum Gefrieren nahezu des gesamten in dem durchströmenden Abgas gelösten Wasserdampfs führt. Dies wird im Folgenden auch "Vereisungsphase" genannt. Ist ein gewünschter oder noch akzeptabler Füllgrad mit akkumuliertem Eis in dem jeweiligen Wärmetauscher 4 oder 6 erreicht, werden die Ventile 162 bis 165 derart umgeschaltet, dass die Kühlung dieses Wärmetauschers 4 oder 6 beendet und des jeweils anderen Wärmetauschers 6 oder 4 beginnt. Generell fließt der durch den betreffenden Wärmetauscher 4 oder 6 strömende Wasserstoff in den gemeinsamen Kühlmittelausgang 14, während die Verbindung zwischen dem gemeinsamen Kühlmittelausgang 14 und dem jeweils anderen Wärmetauscher 6 oder 4 verschlossen ist.

Während der Vereisungsphase eines Wärmetauschers 4 oder 6 sind die Ventile 166 bis 169 derart geöffnet bzw. geschlossen, dass das aus dem betreffenden Wärmetauscher 4 oder 6 strömende Abgas in den gemeinsamen Abgasausgang gerät und dort etwa zur Inertisierung eines Kraftstofftanks zur Verfügung steht. Die Verbindung gemeinsamen Abgasausgangs 10 mit dem jeweils anderen Wärmetauscher 6 oder 4 wird unterbunden.

In einer anschließenden Regenerationsphase wird der betreffende Wärmetauscher 4 oder 6 nicht mehr durch das Kühlmittel gekühlt, sondern nur von Abgas aus dem gemeinsamen Abgaseingang 8 durchströmt, während das Abgas anschließend in den gemeinsamen Abgasausgang 20 gerät und dort in die Umgebung abgeführt wird. Der Wärmeeintrag führt zum Abtauen des akkumulierten Eises. Gleichzeitig wird dem gemeinsamen Abgasausgang 20 durch einen Kondensatableiter 18 das Schmelzwasser des akkumulierten Eises entnommen. Die Verbindung des betreffenden Wärmetauschers 4 oder 6 mit dem gemeinsamen Abgasauslass 10 wird durch Schließen des Ventils 167 bzw. 169 unterbrochen.

Durch einen alternierenden Betrieb der beiden Wärmetauscher 4 und 6 jeweils abwechselnd in einer Vereisungsphase und einer Regenerationsphase kann erreicht werden, dass keiner der beiden Wärmetauscher 4 und 6 vollständig mit akkumuliertem Eis befüllt und dadurch verstopft wird.

Beispielhaft zeigt die folgende Tabelle die Regenerationsphase des ersten Wärmetauschers 4 und die Vereisungsphase des zweiten Wärmetauschers 6, jeweils mit den zugehörigen Stellungen der Ventile 160-169:

| | |
|---|---|
| Ventil 160 mehr offen | Ventil 161 mehr geschlossen |
| Ventil 162 geschlossen | Ventil 164 offen |
| Ventil 163 offen | Ventil 165 geschlossen |
| Ventil 167 geschlossen | Ventil 169 offen |
| Ventil 166 offen | Ventil 168 geschlossen |

Anzumerken ist, dass die Formulierung "mehr geschlossen" bzw. "mehr offen" bedeutet, dass die beispielhaft als Proportionalventile ausgeführten Ventile 160 und 161 nicht ganz geschlossen bzw. geöffnet werden, um eine Teilung des Abgasstroms erreichen zu können, so dass in jeder Phase genügend Abgas zum Trocknen durch Vereisen bzw. zum Regenerieren zur Verfügung steht.

In folgender Tabelle ist der umgekehrte Fall gezeigt, in dem der erste Wärmetauscher in der Vereisungsphase betrieben wird und der zweite Wärmetauscher in der Regenerationsphase:

| | |
|---|---|
| Ventil 160 mehr geschlossen | Ventil 161 mehr offen |
| Ventil 162 offen | Ventil 164 geschlossen |
| Ventil 163 geschlossen | Ventil 165 offen |
| Ventil 167 offen | Ventil 169 geschlossen |
| Ventil 166 geschlossen | Ventil 168 offen |

Eine beispielhaft dargestellte Recheneinheit 70, deren Verbindungen zu den einzelnen Ventilen 160 bis 169 aus Übersichtlichkeitsgründen nicht explizit dargestellt werden, ist dazu eingerichtet, die Ventile 160 bis 169 derart anzusteuern, dass eine automatische Umschaltung zwischen Vereisungsphasen und Regenerationsphasen durchgeführt wird. Hierzu bietet es sich an, in den Wärmetauschern 4 und 6 Sensoren 16 anzuordnen, die den jeweiligen Vereisungsgrad detektieren können, so dass eine Bestimmung eines günstigen Umschaltzeitpunktes durch die Recheneinheit 70 erfolgen kann.

Aus dem Abgasausgang 10 strömt schließlich Abgas mit einem sehr niedrigen bzw. verschwindend geringen Wasseranteil, so dass sich dieses getrocknete Abgas besonders gut für die Inertisierung eines Tanksystems oder dergleichen eignet.

In Fig. 2 wird eine Weiterbildung in Form eines erfindungsgemäßen Systems 22 zum Trocknen von Abgasen eines Brennstoffzellensystems gezeigt. Hierbei wird das erfindungsgemäße System 2 gemäß Fig. 1 erweitert und weist einen dritten Wärmetauscher 24 und einen vierten Wärmetauscher 26 auf. Aus einem Abgaseingang 28 strömt Abgas in den vierten Wärmetauscher 26, von dort in den dritten Wärmetauscher 24 und von dort in den gemeinsamen Abgaseingang 8 des erfindungsgemäßen Systems 2, das hier als ein Funktionsblock dargestellt ist. Der vierte Wärmetauscher 26 weist einen vierten Kühlmitteleingang 30 auf, der mit dem gemeinsamen Abgasausgang 10 des erfindungsgemäßen Systems 2 verbunden ist. Durch die stete Kühlung des Abgases ist das aus dem gemeinsamen Abgasausgang 10 strömende Abgas schon deutlich kälter als das am gemeinsamen Abgaseingang 28 anliegende Abgas direkt aus dem Brennstoffzellensystem. Durch den vierten Wärmetauscher 26 wird demnach ermöglicht, die Effektivität des erfindungsgemäßen Systems 22 zu steigern, da zumindest ein Teil der Kühlleistung in dem System 22 verbleiben kann. Das durch den vierten Wärmetauscher 26 strömende Abgas strömt durch den Kühlmittelaustritt 32 des vierten Wärmetauschers 26 heraus und kann beispielsweise zur Inertisierung eines Tanksystems verwendet werden.

Das aus einem vierten Abgasaustritt 34 des vierten Wärmetauschers 26 strömende Abgas strömt in den dritten Abgaseintritt 36 des dritten Wärmetauschers 24 ein. Dort wird es durch ein Kühlmittel gekühlt, das über einen dritten Kühlmitteleintritt 38 in den dritten Wärmetauscher 24 einströmt und durch einen dritten Kühlmittelaustritt 40 wieder herausströmt. Der dritte Kühlmitteleintritt 38 des dritten Wärmetauschers 24 ist mit dem gemeinsamen Kühlmittelausgang 14 des erfindungsgemäßen Systems 2 verbunden. Da das am gemeinsamen Kühlmitteleingang 12 anliegende sehr kalte Wasserstoffgas bereits in drei Wärmetauschern 4, 6 und 24 Wärme aufgenommen hat, kann es für den Betrieb beispielsweise eines Brennstoffzellensystems (nicht dargestellt), verwendet werden. Hier muss darauf geachtet werden, dass die Temperatur des gasförmigen Wasserstoffs möglichst oberhalb von Null Grad Celsius liegt, eventuell wäre eine nachgeschaltete Erwärmungseinrichtung an dem dritten Kühlmittelaustritt 40 des dritten Wärmetauschers 24 erforderlich.

Anfallendes Kondensat wird über einen Kondensatableiter 42 aus dem erfindungsgemäßen System 22 abgeführt. Durch die Verwendung des dritten Wärmetauschers 24 und des vierten Wärmetauschers 26 kann bereits ein Großteil des Wasserdampfs aus dem Abgas auskondensiert werden, wobei in dem System 22 gemäß der Erfindung eine Resttrocknung und Erreichen eines sehr niedrigen Taupunkts erreicht wird.

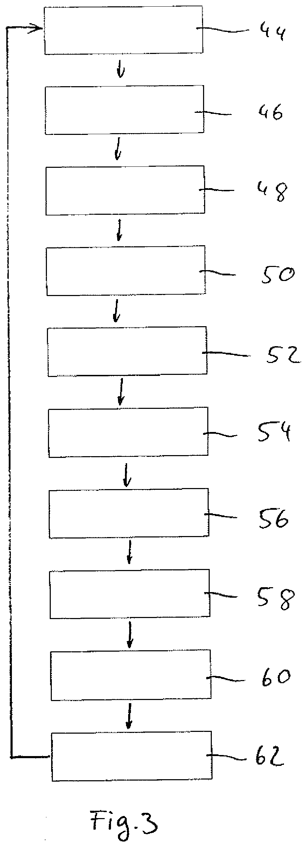

In Fig. 3 wird schematisch anhand einer Blockdarstellung das erfindungsgemäße Verfahren dargestellt, das im Wesentlichen die Schritte des Einleitens 44 von Abgasen eines Brennstoffzellensystems in einen ersten Wärmetauscher und Beaufschlagen 46 des ersten Wärmetauschers mit einem Kühlmittel zum Vereisen von in dem Abgas befindlichen Wasserdampf, Reduzieren 48 des Einleitens von Abgas in den ersten Wärmetauscher und Unterbrechen des Beaufschlagens 50 mit dem Kühlmittel zum Auftauen akkumulierten Kondensateises und Abführen 52 mittels mindestens eines Kondensatableiters, Einleiten 54 von Abgas eines Brennstoffzellensystems in einen zweiten Wärmetauscher und Beaufschlagen 56 des ersten Wärmetauschers mit einem Kühlmittel zum Vereisen von in dem Abgas befindlichen Wasserdampf sowie Reduzieren 58 des Einleitens von Abgas in den zweiten Wärmetauscher und Unterbrechen des Beaufschlagens 60 mit dem Kühlmittel zum Auftauen akkumulierten Kondensateises und Abführen 62 mittels des Kondensatableiters aufweist.

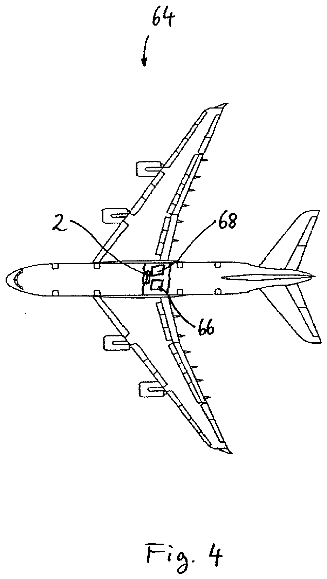

Schließlich wird in Fig. 4 ein Flugzeug 64 mit einem Brennstoffzellensystem 66, einem kryogenen Wasserstofftank 68 und einer erfindungsgemäßen Vorrichtung 2 gezeigt, bei dem das Abgas aus dem Brennstoffzellensystem 66 mittels der erfindungsgemäßen Vorrichtung 2 getrocknet wird.

Bezugszeichen in den Ansprüchen sind nicht als Einschränkung anzusehen.

### BEZUGSZEICHEN

- 2: erfindungsgemäßes System
- 4: erster Wärmetauscher
- 6: zweiter Wärmetauscher
- 8: gemeinsamer Abgaseingang
- 10: gemeinsamer Abgasausgang
- 12: gemeinsamer Kühlmitteleingang
- 14: gemeinsamer Kühlmittelausgang
- 16: Sensor
- 160 - 169:: Ventile
- 18: Kondensatableiter
- 20: Kondensatableiter
- 22: erfindungsgemäßes System
- 24: dritter Wärmetauscher
- 26: vierter Wärmetauscher
- 28: Abgaseingang
- 30: Kühlmitteleintritt
- 32: Kühlmittelaustritt
- 34: Abgasaustritt
- 36: Abgaseintritt
- 38: Kühlmitteleintritt
- 40: Kühlmittelaustritt
- 42: Kondensatableiter
- 44: Einleiten von Abgasen
- 46: Beaufschlagen mit Kühlmittel
- 48: Unterbrechen Abgaseinleitung
- 50: Unterbrechen Kühlmittelbeaufschlagung
- 52: Abführen Kondensat
- 54: Einleiten von Abgas
- 56: Beaufschlagen mit Kühlmittel
- 58: Unterbrechen Abgaseinleitung
- 60: Unterbrechen Kühlmittelbeaufschlagung
- 62: Abführen Kondensat
- 64: Flugzeug
- 66: Brennstoffzellensystem
- 68: kryogener Wasserstofftank
- 70: Recheneinheit

## Patentansprüche

1. System zum Trocknen von Abgasen eines Brennstoffzellensystems, aufweisend
- mindestens einen ersten Wärmetauscher (4);
- mindestens einen zweiten Wärmetauscher (6);
- einen gemeinsamen Abgaseingang (8) und einen gemeinsamen Abgasausgang (10);
- einen gemeinsamen Kühlmitteingang (12) und einen gemeinsamen Kühlmittelausgang (14);
- einen gemeinsamen Luftauslass (20);
- eine Ventilanordnung mit mehreren Ventilen (161-169) und
- mindestens einen Kondensatableiter (18, 42) zum Abführen von Kondensat;
wobei die Ventilanordnung dazu eingerichtet ist, entweder den ersten Wärmetauscher (4) oder den zweiten Wärmetauscher (6) in einer Vereisungsphase zu betreiben und den jeweils anderen Wärmetauscher in einer Regenerationsphase zu betreiben,
wobei die Ventilanordnung derart eingerichtet ist, in der Vereisungsphase einen Teil eines in den gemeinsamen Abgaseingang (8) einströmenden und durch den gemeinsamen Abgasausgang (10) ausströmenden Abgases und ein in den gemeinsamen Kühlmitteleingang (12) und aus dem gemeinsamen Kühlmittelausgang (14) strömendes Kühlmittel durch den jeweiligen Wärmetauscher zum Vereisen des im Abgas befindlichen Wasserdampfs fließen zu lassen und
wobei die Ventilanordnung derart eingerichtet ist, in der Regenerationsphase einen Teil des Abgases aus dem gemeinsamen Abgaseingang (8) durch den betreffenden Wärmetauscher zu dem gemeinsamen Luftauslass (20) strömen zu lassen und dabei das gebildete Eiskondensat aufzutauen und durch den Kondensatableiter (18) abzuführen.

2. System nach Anspruch 1, wobei der gemeinsame Kühlmitteleingang (12) mit einem Tank für flüssigen Wasserstoff in Verbindung steht.

3. System nach Anspruch 1 oder 2, wobei der gemeinsame Kühlmittelausgang (14) mit einem Tank für flüssigen Wasserstoff in Verbindung steht.

4. System nach einem der vorhergehenden Ansprüche, wobei der gemeinsame Abgasausgang (10) mit einem Kraftstofftank zum Inertisieren eines freien Tankvolumens in Verbindung steht.

5. System nach einem der vorhergehenden Ansprüche, ferner aufweisend eine mit den Ventilen (160-169) verbundene Recheneinheit, die dazu eingerichtet ist, die Ventile (160-169) derart anzusteuern, dass der erste Wärmetauscher (4) und der zweite Wärmetauscher (6) abwechselnd in einer Vereisungsphase und einer Regenerationsphase betrieben werden.

6. System nach Anspruch 5, wobei die Recheneinheit anhand von bekannten Vereisungskennlinien des ersten Wärmetauschers (4) und des zweiten Wärmetauschers (6) in Abhängigkeit von Umgebungsbedingungen einen günstigen Zeitpunkt für die Betätigung der Ventile (160-169) selbständig ermittelt.

7. System nach Anspruch 6, wobei der erste Wärmetauscher (4) und der zweite Wärmetauscher (6) Sensoren zum Feststellen ihres jeweiligen Vereisungsgrades aufweisen und/oder zum Erfassen ihrer Temperatur aufweisen, die mit der Recheneinheit zum Ermitteln des günstigen Zeitpunkts für die Betätigung der Ventile (160-169) verbunden sind.

8. System nach einem der vorhergehenden Ansprüche, ferner aufweisend einen dritten Wärmetauscher (24) mit einem dritten Kühlmitteleintritt (38), einem dritten Kühlmittelaustritt (40), einem dritten Abgaseintritt (36) und einem dritten Abgasaustritt, wobei der dritte Kühlmitteleintritt (38) mit dem gemeinsamen Kühlmittelausgang (14) des ersten Wärmetauschers (4) und des zweiten Wärmetauschers (6) verbunden ist und wobei der dritte Abgasaustritt mit dem gemeinsamen Abgaseingang (8) des ersten Wärmetauschers (4) und des zweiten Wärmetauschers (6) verbunden ist.

9. System nach Anspruch 8, wobei der dritte Kühlmittelaustritt dazu eingerichtet ist, mit einem Brennstoffeingang eines Brennstoffzellensystems verbunden zu werden.

10. System nach Anspruch 8 oder 9, ferner aufweisend einen vierten Wärmetauscher (26) mit einem vierten Kühlmitteleintritt (30), einem vierten Kühlmittelaustritt (32), einem vierten Abgaseintritt (28) und einem vierten Abgasaustritt (34), wobei der vierte Kühlmitteleintritt (30) mit dem gemeinsamen Kühlmittelausgang (10) des ersten Wärmetauschers (4) und des zweiten Wärmetauschers (6) verbunden ist und wobei der vierte Abgasaustritt (34) mit dem dritten Abgaseintritt (36) verbunden ist.

11. Verfahren zum Trocknen von Abgasen eines Brennstoffzellensystems, aufweisend die Schritte:
- Einleiten eines Teils eines Abgases eines Brennstoffzellensystems in einen ersten Wärmetauscher und Beaufschlagen des ersten Wärmetauschers mit einem Kühlmittel zum Vereisen von in dem Abgas befindlichem Wasserdampf;
- Reduzieren des Einleitens von Abgas in den ersten Wärmetauscher und Unterbrechen des Beaufschlagens mit dem Kühlmittel zum Auftauen akkumulierten Kondensateises und Abführen mittels mindestens eines Kondensatableiters;
- Einleiten eines Teils eines Abgases eines Brennstoffzellensystems in einen zweiten Wärmetauscher und Beaufschlagen des zweiten Wärmetauschers mit einem Kühlmittel zum Vereisen von in dem Abgas befindlichem Wasserdampf;
- Reduzieren des Einleitens von Abgas in den zweiten Wärmetauscher und Unterbrechen des Beaufschlagens mit dem Kühlmittel zum Auftauen akkumulierten Kondensateises und Abführen mittels des Kondensatableiters.

12. Verfahren nach Anspruch 11, wobei die Schritte kontinuierlich nacheinander ausgeführt werden, wobei bei kontinuierlicher Ausführung des Verfahrens das Einleiten des Abgases durch Erhöhung der Abgaszufuhr realisiert wird.

13. Verfahren nach Anspruch 11 oder 12, wobei als Kühlmittel Wasserstoff mit einer Temperatur im Bereich des Wasserstoffsiedepunkts aus einem Tank für flüssigen Wasserstoff verwendet wird.

14. Verwendung eines Systems nach einem der Ansprüche 1 bis 10 in einem Flugzeug.

15. Flugzeug mit mindestens einem Brennstoffzellensystem, mindestens einem kryogenen Wasserstofftank und mindestens einem System zum Trocknen von Abgasen eines Brennstoffzellensystems, aufweisend
- mindestens einen ersten Wärmetauscher (4);
- mindestens einen zweiten Wärmetauscher (6);
- einen gemeinsamen Abgaseingang (8) und einen gemeinsamen Abgasausgang (10);
- einen gemeinsamen Kühlmitteingang (12) und einen gemeinsamen Kühlmittelausgang (14);
- einen gemeinsamen Luftauslass (20);
- eine Ventilanordnung mit mehreren Ventilen (161-169) und
- mindestens einen Kondensatableiter (18, 42) zum Abführen von Kondensat;
wobei die Ventilanordnung dazu eingerichtet ist, entweder den ersten Wärmetauscher (4) oder den zweiten Wärmetauscher (6) in einer Vereisungsphase zu betreiben und den jeweils anderen Wärmetauscher in einer Regenerationsphase zu betreiben,
wobei die Ventilanordnung derart eingerichtet ist, in der Vereisungsphase einen Teil eines in den gemeinsamen Abgaseingang (8) einströmenden und durch den gemeinsamen Abgasausgang (10) ausströmenden Abgases und ein in den gemeinsamen Kühlmitteleingang (12) und aus dem gemeinsamen Kühlmittelausgang (14) strömendes Kühlmittel durch den jeweiligen Wärmetauscher zum Vereisen des im Abgas befindlichen Wasserdampfs fließen zu lassen und
wobei die Ventilanordnung derart eingerichtet ist, in der Regenerationsphase einen Teil des Abgases aus dem gemeinsamen Abgaseingang (8) durch den betreffenden Wärmetauscher zu dem gemeinsamen Luftauslass (20) strömen zu lassen und dabei das gebildete Eiskondensat aufzutauen und durch den Kondensatableiter (18) abzuführen.

## Claims

1. System for drying of exhaust gases from a fuel cell system, comprising
- at least one first heat exchanger (4);
- at least one second heat exchanger (6);
- a common exhaust gas inlet (8) and a common exhaust gas outlet (10);
- a common coolant inlet (12) and a common coolant outlet (14);
- a common air outlet (20);
- a valve arrangement with a multitude of valves (161-169) and
- at least one condensate extractor (18, 42) for extracting condensate;
wherein the valve arrangement is adapted for operating either the first heat exchanger (4) or the second heat exchanger (6) in an icing phase and for operating the respective other heat exchanger in a regeneration phase,
wherein the valve arrangement is adapted for letting a part of an exhaust gas that flows into the common exhaust inlet (8) and that flows out of the common exhaust outlet (10) and a part of a coolant that flows into the common coolant inlet (12) and out of the common coolant outlet (14) flow through the respective heat exchanger for icing the vapor present in the exhaust gas during the icing phase,
wherein the valve arrangement is adapted for letting a part of the exhaust gas from the common exhaust gas inlet (8) flow to the common air outlet (20) through the respective heat exchanger and thereby thaw the accumulated condensate ice and extract it through the condensate exctractor (18) during the regeneration phase.

2. System according to claim 1, wherein the common coolant inlet (12) is connected to a tank for liquid hydrogen.

3. System according to claim 1 or 2, wherein the common coolant outlet (14) is connected to a tank for liquid hydrogen.

4. System according to any of the above claims, wherein the common exhaust gas outlet (10) is connected to a fuel tank for inerting a free volume of the tank.

5. System according to any of the above claims, further comprising a processing unit connected to the valves (160-169), which is adapted in such a manner that the valves (160-169) are so controlled that the first heat exchanger (4) and the second heat exchanger (6) are operated alternately in an icing phase and a regeneration phase.

6. System according to Claim 5, wherein the processing unit, on the basis of known characteristic icing curves of the first heat exchanger (4) and the second heat exchanger (6) automatically determines a favourable time for the activation of the valves (160-169) in relation to surrounding conditions.

7. System according to claim 6, wherein the first heat exchanger (4) and the second heat exchanger (6) comprise sensors to determine their respective degrees of icing and/or their temperatures, said sensors being connected to the processing unit in order to determine a favourable time for the activation of the valves (160-169).

8. System according to any of the above claims, additionally comprising a third heat exchanger (24) with a third coolant inlet (38), a third coolant outlet (40), a third exhaust gas inlet (36) and a third exhaust gas outlet, wherein the third coolant inlet (38) is connected to the common coolant outlet (14) of the first heat exchanger (4) and the second heat exchanger (6) and wherein the third exhaust gas outlet is connected to the common exhaust gas inlet (8) of the first heat exchanger (4) and the second heat exchanger (6).

9. System according to Claim 8, wherein the third coolant outlet is constructed in such a manner that it is connectable to a fuel inlet of a fuel cell system.

10. System according to Claim 8 or 9, comprising a fourth heat exchanger (26) with a fourth coolant inlet (30), a fourth coolant outlet (32), a fourth exhaust gas inlet (28) and a fourth exhaust gas outlet (34), wherein the fourth coolant inlet (30) is connected to the common coolant outlet (10) of the first heat exchanger (4) and the second heat exchanger (6) and wherein the fourth exhaust gas outlet (34) is connected to the third exhaust gas inlet (36).

11. Method for drying of exhaust gases from a fuel cell system, comprising the steps:
- introducing of a part of an exhaust gas from a fuel cell system into a first heat exchanger and exposing of the first heat exchanger to a coolant for icing the water vapor contained in the exhaust gas;
- reducing the introduction of the exhaust gas into the first heat exchanger and interrupting the exposure to the coolant for thawing the accumulated condensate ice and extracting the condensate by means of at least one condensate extractor;
- introducing a part of an exhaust gas from a fuel cell system into a second heat exchanger and exposing the second heat exchanger to a coolant for icing the water vapor contained in the exhaust gas;
- reducing the introduction of the exhaust gas into the second heat exchanger and interrupting the exposure to the coolant for thawing the accumulated condensate ice and extracting of this by means of the condensate extractor.

12. Method according to Claim 11, wherein the steps are carried out continuously in sequence, wherein, if the process is carried out continuously, the introduction of the exhaust gas is achieved by increasing the exhaust gas flow.

13. Method according to Claim 11 or 12, wherein hydrogen with a temperature in the range of the hydrogen boiling point is used as a coolant from a tank for liquid hydrogen.

14. The use of a system according to any of the Claims 1 to 10 in an aircraft.

15. Aircraft comprising at least one fuel cell system, at least one cryogenic hydrogen tank and at least one system for the drying of exhaust fuels from a fuel cell system, comprising
- at least one first heat exchanger (4);
- at least one second heat exchanger (6);
- a common exhaust gas inlet (8) and a common exhaust gas outlet (10);
- a common coolant inlet (12) and a common coolant outlet (14);
- a common air outlet (20);
- a valve arrangement with a multitude of valves (161-169) and
- at least one condensate extractor (18, 42) for extracting condensate;
wherein the valve arrangement is adapted for operating either the first heat exchanger (4) or the second heat exchanger (6) in an icing phase and for operating the respective other heat exchanger in a regeneration phase,
wherein the valve arrangement is adapted for letting a part of an exhaust gas that flows into the common exhaust inlet (8) and that flows out of the common exhaust outlet (10) and a part of a coolant that flows into the common coolant inlet (12) and out of the common coolant outlet (14) flow through the respective heat exchanger for icing the vapor present in the exhaust gas during the icing phase,
wherein the valve arrangement is adapted for letting a part of the exhaust gas from the common exhaust gas inlet (8) flow to the common air outlet (20) through the respective heat exchanger and thereby thaw the accumulated condensate ice and extract it through the condensate exctractor (18) during the regeneration phase.

## Revendications

1. Système de séchage des gaz rejetés par un système de pile à combustible, comportant
- au moins un premier échangeur de chaleur (4) ;
- au moins un deuxième échangeur de chaleur (6) ;
- une entrée commune de gaz rejetés (8) et une sortie commune de gaz rejetés (10) ;
- une entrée commune de fluide de refroidissement (12) et une sortie commune de fluide de refroidissement (14) ;
- une sortie commune d'air (20) ;
- un ensemble de vannes comprenant plusieurs vannes (161-169) et
- au moins un séparateur de condensat (18, 42) destiné à évacuer le condensat ;
dans lequel l'ensemble de vannes est configuré pour exploiter soit le premier échangeur de chaleur (4) soit le deuxième échangeur de chaleur (6) dans une phase de givrage et exploiter l'autre échangeur de chaleur respectif dans une phase de régénération,
dans lequel l'ensemble de vannes est configuré pour, dans la phase de givrage, laisser s'écouler une partie des gaz rejetés arrivant dans l'entrée commune de gaz rejetés (8) et s'échappant par la sortie commune de gaz rejetés (10) et un fluide de refroidissement s'écoulant dans l'entrée commune de fluide de refroidissement (12) et de la sortie commune de fluide de refroidissement (14) à travers l'échangeur de chaleur respectif pour le givrage de la vapeur d'eau se trouvant dans les gaz rejetés et
dans lequel l'ensemble de vannes est configuré pour, dans la phase de régénération, laisser s'écouler une partie des gaz rejetés de l'entrée commune de gaz rejetés (8) à la sortie commune d'air (20) à travers l'échangeur de chaleur concerné et pour dégeler ainsi le condensat givré formé et l'évacuer par le séparateur de condensat (18).

2. Système selon la revendication 1, dans lequel l'entrée commune de fluide de refroidissement (12) est en communication avec un réservoir d'hydrogène liquide.

3. Système selon la revendication 1 ou 2, dans lequel la sortie commune de fluide de refroidissement (14) est en communication avec un réservoir d'hydrogène liquide.

4. Système selon l'une des revendications précédentes, dans lequel la sortie commune de gaz rejetés (10) est en communication avec un réservoir à carburant pour l'inertage d'un volume de réservoir libre.

5. Système selon l'une des revendications précédentes, comportant en outre une unité de calcul reliée aux vannes (160-169), qui est configurée pour commander les vannes (160 - 169) de telle manière que le premier échangeur de chaleur (4) et le deuxième échangeur de chaleur (6) sont exploités alternativement dans une phase de givrage et une phase de régénération.

6. Système selon la revendication 5, dans lequel l'unité de calcul détermine automatiquement un moment propice à l'actionnement des vannes (160-169) à l'aide de caractéristiques de givrage connues du premier échangeur de chaleur (4) et du deuxième échangeur de chaleur (6) en fonction de conditions ambiantes.

7. Système selon la revendication 6, dans lequel le premier échangeur de chaleur (4) et le deuxième échangeur de chaleur (6) comportent des capteurs destinés à déterminer leur degré de givrage respectif et/ou à détecter leur température, qui sont reliés à l'unité de calcul pour déterminer le moment propice à l'actionnement des vannes (160-169).

8. Système selon l'une des revendications précédentes, comportant en outre un troisième échangeur de chaleur (24) comprenant une troisième entrée de fluide de refroidissement (38), une troisième sortie de fluide de refroidissement (40), une troisième entrée de gaz rejetés (36) et une troisième sortie de gaz rejetés, la troisième entrée de fluide de refroidissement (38) étant reliée à la sortie commune de fluide de refroidissement (14) du premier échangeur de chaleur (4) et du deuxième échangeur de chaleur (6) et la troisième sortie de gaz rejetés étant reliée à l'entrée commune de gaz rejetés (8) du premier échangeur de chaleur (4) et du deuxième échangeur de chaleur (6).

9. Système selon la revendication 8, dans lequel la troisième sortie de fluide de refroidissement est configurée pour être reliée à une entrée de combustible d'un système de pile à combustible.

10. Système selon la revendication 8 ou 9, comportant en outre un quatrième échangeur de chaleur (26) comprenant une quatrième entrée de fluide de refroidissement (30), une quatrième sortie de fluide de refroidissement (32), une quatrième entrée de gaz rejetés (28) et une quatrième sortie de gaz rejetés, la quatrième entrée de fluide de refroidissement (30) étant reliée à la sortie commune de fluide de refroidissement (10) du premier échangeur de chaleur (4) et du deuxième échangeur de chaleur (6) et la quatrième sortie de gaz rejetés (34) étant reliée à la troisième entrée de gaz rejetés (36).

11. Procédé de séchage des gaz rejetés par un système de pile à combustible, comportant les étapes consistant à :
- introduire une partie des gaz rejetés par un système de pile à combustible dans un premier échangeur de chaleur et soumettre le premier échangeur de chaleur à l'action d'un fluide de refroidissement pour geler de la vapeur d'eau se trouvant dans les gaz rejetés ;
- réduire l'introduction de gaz rejetés dans le premier échangeur de chaleur et interrompre la soumission à l'action du fluide de refroidissement pour dégeler du givre de condensation accumulé et l'évacuer au moyen d'au moins un séparateur de condensat ;
- introduire une partie des gaz rejetés par un système de pile à combustible dans un deuxième échangeur de chaleur et soumettre le deuxième échangeur de chaleur à l'action d'un fluide de refroidissement pour geler de la vapeur d'eau se trouvant dans les gaz rejetés ;
- réduire l'introduction de gaz rejetés dans le deuxième échangeur de chaleur et interrompre la soumission à l'action du fluide de refroidissement pour dégeler du givre de condensation accumulé et l'évacuer au moyen du séparateur de condensat.

12. Procédé selon la revendication 11, dans lequel les étapes sont exécutées successivement en continu, l'introduction des gaz rejetés étant réalisée par l'augmentation de l'alimentation en gaz rejetés lorsque le procédé est exécuté en continu.

13. Procédé selon la revendication 11 ou 12, dans lequel de l'hydrogène à une température se trouvant dans la zone du point d'ébullition de l'hydrogène, provenant d'un réservoir pour hydrogène liquide, est utilisé comme fluide de refroidissement.

14. Utilisation d'un système selon l'une des revendications 1 à 10 dans un avion.

15. Avion comprenant au moins un système de pile à combustible, au moins un réservoir d'hydrogène cryogénique et au moins un système de séchage des gaz rejetés par un système de pile à combustible, comportant :
- au moins un premier échangeur de chaleur (4) ;
- au moins un deuxième échangeur de chaleur (6) ;
- une entrée commune de gaz rejetés (8) et une sortie commune de gaz rejetés (10) ;
- une entrée commune de fluide de refroidissement (12) et une sortie commune de fluide de refroidissement (14) ;
- une sortie commune d'air (20) ;
- un ensemble de vannes comprenant plusieurs vannes (161-169), et
- au moins un séparateur de condensat (18, 42) destiné à évacuer le condensat ;
dans lequel l'ensemble de vannes est configuré pour exploiter soit le premier échangeur de chaleur (4) soit le deuxième échangeur de chaleur (6) dans une phase de givrage et exploiter l'autre échangeur de chaleur respectif dans une phase de régénération,
dans lequel l'ensemble de vannes est configuré pour, dans la phase de givrage, laisser s'écouler une partie des gaz rejetés arrivant dans l'entrée commune de gaz rejetés (8) et s'échappant par la sortie commune de gaz rejetés (10) et un fluide de refroidissement s'écoulant dans l'entrée commune de fluide de refroidissement (12) et de la sortie commune de fluide de refroidissement (14) à travers l'échangeur de chaleur respectif pour le givrage de la vapeur d'eau se trouvant dans les gaz rejetés et
dans lequel l'ensemble de vannes est configuré pour, dans la phase de régénération, laisser s'écouler une partie des gaz rejetés de l'entrée commune de gaz rejetés (8) à la sortie commune d'air (20) à travers l'échangeur de chaleur concerné et pour dégeler ainsi le condensat givré formé et l'évacuer par le séparateur de condensat (18).
